# DEMANDE DE BREVET EUROPEEN

(11) **EP 0 842 896 A1**
(43) Date de publication de la demande: **20.05.1998**
(21) Numéro de dépôt: 97402700.5
(22) Date de dépôt: 12.11.1997
(51) Int. Cl.: C01C 1/28, C01C 1/18, B01J 10/00, B01J 19/24

(54) **Réacteur, procédé et installation pour la fabrication de sels d'ammoniaque**

(30) Priorité: 18.11.1996 FR 9614028
(71) Demandeur: KALTENBACH - THURING S.A., 60000 Beauvais (FR)
(72) Inventeur: Vogel, Edmond, 92420 Vaucresson (FR); Monsterleet, Jacques, 78160 - Marly le Roi (FR)
(74) Mandataire: Moncheny, Michel

(57) **Abrégé**

Ce réacteur pour la fabrication de sels d'ammoniaque, du type comprenant une chambre de réaction tubulaire (110), au moins une alimentation (112) en acide et au moins une alimentation (111) en ammoniac, disposées dans une première partie amont R₁ du réacteur, est caractérisé notamment en ce qu'il comprend une deuxième partie R₂ disposée dans le prolongement de la première et comportant de l'amont vers l'aval : un tronçon convergent (122), un tronçon cylindrique (121) et un tronçon divergent (123), cette deuxième partie étant munie d'au moins une deuxième alimentation (124) en ammoniac qui débouche dans cette deuxième partie au voisinage du tronçon convergent et qui est réglée de façon à obtenir en sortie du réacteur des vapeurs basiques.

L'invention a aussi pour objet un procédé et une installation pour la fabrication d'engrais, notamment de nitrates.

## Description

La présente invention concerne la fabrication de sels d'ammoniaque utilisés notamment comme engrais.

On connaît en particulier d'après de nombreux documents (brevets US 2 568 901, US 2 755 176, US 2 902 342) des procédés de fabrication de sels d'ammoniaque au moyen d'un réacteur tubulaire. Selon ces procédés, on introduit dans une chambre de réaction tubulaire, les deux réactifs (acide et base) dans des proportions sensiblement stoechiométriques, c'est-à-dire mole pour mole. La chambre de réaction proprement dite est prolongée par un tube de diamètre sensiblement voisin de celui de la chambre, dans lequel la réaction de neutralisation se poursuit. Les conduits d'amenée des deux réactifs peuvent déboucher dans la chambre de réaction l'un axialement et l'autre tangentiellement. Leur mélange est favorisé par la présence d'éléments susceptibles d'engendrer des turbulences, tels que venturis, déflecteurs, etc...

La longueur totale de la chambre de réaction et du tube qui la prolonge est en générale importante (souvent plus de 50 fois le diamètre du tube), de façon à permettre une réaction de neutralisation aussi complète que possible.

On a constaté que dans ce type de réacteur et de procédé, la forte température résultant de la réaction exothermique entre la base et l'acide (dans le cas de l'ammoniac et de l'acide nitrique, cette température peut être comprise entre 150 et 220° C) rend extrêmement corrosives les gouttelettes d'acide nitrique non neutralisé. Il en résulte une destruction rapide de l'ensemble du réacteur, rendant nécessaire le remplacement de ce dernier au terme d'une période qui peut être de l'ordre de 6 à 12 mois. Des durées d'utilisation plus longues pourraient être atteintes en utilisant par exemple du titane à la place d'acier inoxydable, mais il s'ensuivrait un coût prohibitif pour le réacteur.

On constate également dans ces procédés connus que malgré les proportions stoechiométriques prévues et la longueur de l'ensemble du réacteur, la réaction n'est pas parfaite et que de l'ammoniac subsiste dans la vapeur que l'on sépare de la solution de nitrate à la sortie du réacteur.

L'invention objet de ce brevet se propose principalement de résoudre le premier des deux problèmes évoqués ci-dessus à savoir réduire voire si possible supprimer la corrosion du réacteur.

Elle se propose également de réduire les pertes d'ammoniac et par conséquent d'améliorer le rendement de la neutralisation.

A cet effet, elle a principalement pour objet un réacteur pour la fabrication de sels d'ammoniaque, du type comprenant une chambre de réaction tubulaire, au moins une alimentation en acide et au moins une alimentation en ammoniac, disposées dans une première partie ou partie amont du réacteur, caractérisé en ce qu'il comprend une deuxième partie disposée dans le prolongement de la première et comportant de l'amont vers l'aval : un tronçon convergent, un tronçon. cylindrique et un tronçon divergent, cette deuxième partie étant munie d'au moins une deuxième alimentation en ammoniac qui débouche dans cette deuxième partie au voisinage du tronçon convergent.

Suivant d'autres caractéristiques :
- la deuxième partie du réacteur comprend un seul tube ;
- elle comprend un tube extérieur et un tube intérieur délimitant entre eux une chambre annulaire, communiquant au moins à son extrémité aval avec le volume intérieur du tube intérieur ;
- le tube intérieur comporte dans sa partie amont au moins un passage communiquant avec la chambre annulaire.

L'invention a également pour objet un procédé de fabrication de sel d'ammoniaque du type dans lequel on introduit au voisinage de l'extrémité amont d'un réacteur tubulaire des réactifs comprenant au moins un acide et de l'ammoniac, puis on sépare dans une enceinte de détente le sel en solution de la vapeur sortant du réacteur, caractérisé en ce qu'on introduit dans la partie amont du réacteur entre 80 et 99 % du débit total de réactifs, on introduit la partie restante de l'ammoniac dans une deuxième partie du réacteur, située dans le prolongement de la première, de telle façon que la vapeur séparée dans l'enceinte de détente ait un pH basique et l'on termine la réaction de neutralisation lors d'une étape supplémentaire, en amenant en contact les vapeurs basiques sortant de l'enceinte de détente avec la partie restante de l'acide.

Suivant d'autres caractéristiques de ce procédé :
- l'acide et l'ammoniac introduits dans la partie amont du réacteur tubulaire sont maintenus dans des proportions sensiblement stoechiométriques ;
- le débit d'ammoniac introduit dans la deuxième partie du réacteur est réglé de façon à obtenir l'excédent d'ammoniac souhaité dans la partie aval du réacteur et de façon à obtenir après séparation dans l'enceinte de détente, des vapeurs présentant un pH basique, de préférence supérieur à 9 ;
- l'étape supplémentaire au cours de laquelle on termine la réaction de neutralisation, est effectuée en neutralisant les vapeurs basiques au moyen d'une solution de lavage formée d'un mélange de sel d'ammoniaque recyclé et d'acide.

L'invention a enfin pour objet une installation de fabrication de sel d'ammoniaque, pour la mise en oeuvre du procédé défini ci-dessus et comprenant notamment un réacteur suivant l'invention.

De façon plus précise, cette installation comprend un réacteur tubulaire, au moins une alimentation en ammoniac et au moins une alimentation en acide débouchant dans une première partie ou partie amont du réacteur, ce réacteur débouchant dans une enceinte de détente dans laquelle on effectue la séparation du sel en solution et de la vapeur, et elle est caractérisée en ce que le réacteur est tel que réalisé selon l'invention et il est prévu un étage supplémentaire dans lequel on met en contact la vapeur en provenance de l'enceinte de détente et la partie restante de l'acide, de façon à obtenir une neutralisation complète.

L'invention va être décrite plus en détail ci-dessous en se référant aux dessins annexés, donnés uniquement à titre d'exemples et sur lesquels :
- les figures 1 à 4 sont des vues en coupe longitudinale de quatre variantes d'un réacteur tubulaire selon l'invention ;
- la figure 5 est une vue en coupe selon la ligne 5-5 de la figure 4 ; et
- la figure 6 est un schéma d'une installation de fabrication de sel d'ammoniaque mettant en oeuvre l'invention.

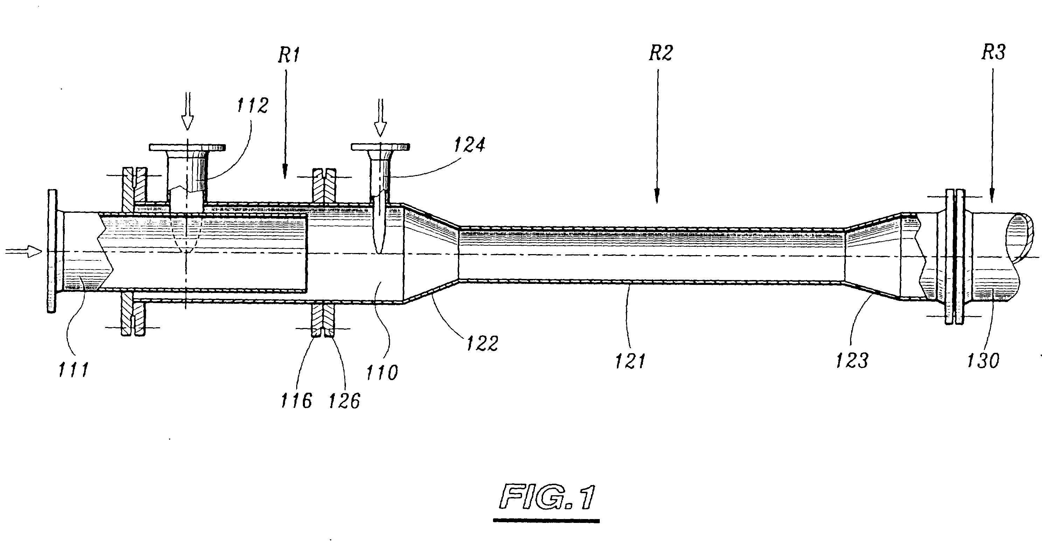

On a représenté sur la figure 1 un réacteur tubulaire R comprenant trois parties R₁, R₂, R₃. La première partie ou partie amont R₁ constitue une chambre de réaction 110 dans laquelle débouchent, d'une part, un conduit axial 111 d'alimentation en ammoniac gazeux, d'autre part, un conduit radial ou de préférence tangentiel 112 d'alimentation en acide, les positions de ces deux alimentations pouvant d'ailleurs être inversées ou modifiées.

La deuxième partie comprend un tube 121 de diamètre inférieur à celui du tube délimitant la chambre 110, prolongé à sa partie amont par un convergent 122 et à sa partie aval par un divergent 123. Un conduit 124 d'alimentation en ammoniac gazeux débouche de préférence tangentiellement dans un court tronçon de tube cylindrique disposé immédiatement en amont du convergent 122 et de diamètre sensiblement égal à celui du tube délimitant la chambre 110. Pour des commodités de fabrication, le conduit 124 d'arrivée d'ammoniac peut être disposé en amont du raccordement à brides entre les tronçons R₁ et R₂ du réacteur. Dans ce cas les positions axiales, sur la figure 1 des brides 116, 126, d'une part, et du conduit 124, d'autre part, sont à peu près inversées.

Le réacteur est complété par un troisième tube 130 fixé à l'extrémité aval du tronçon R₂ et dont le diamètre est voisin de ou éventuellement légèrement inférieur à celui du tube 110 et dont la longueur peut être comprise entre 10 et 50 fois son diamètre. Cependant, de préférence et grâce au perfectionnement apporté par l'invention, la longueur de ce tronçon R₃ peut être maintenue aussi courte que possible et inférieure à ce qu'elle doit être dans les agencements connus.

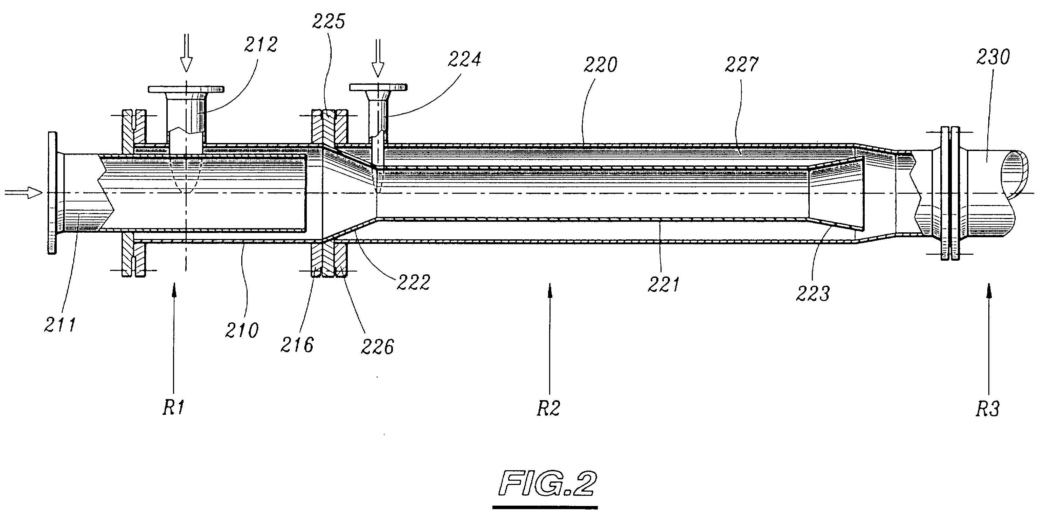

Dans le mode de réalisation de la figure 2, les éléments analogues à ceux de la figure 1 sont désignés par les mêmes références numériques, augmentées de 100. La deuxième partie comprend un tube extérieur 220 de diamètre sensiblement égal à celui du tronçon 210 et un tube intérieur 221 de plus petit diamètre, comportant un convergent 222 à sa partie amont et un divergent 223 à sa partie aval. Le tube intérieur est ici monté en porte-à-faux en étant fixé à son extrémité amont par une bride 225 serrée entre deux brides 216, 226 solidaires respectivement du tronçon 210 et du tube extérieur 220.

Une chambre 227 de forme sensiblement annulaire est délimitée entre les deux tubes extérieur et intérieur et un conduit 224 d'alimentation en ammoniac gazeux débouche au voisinage de la partie amont de cette chambre.

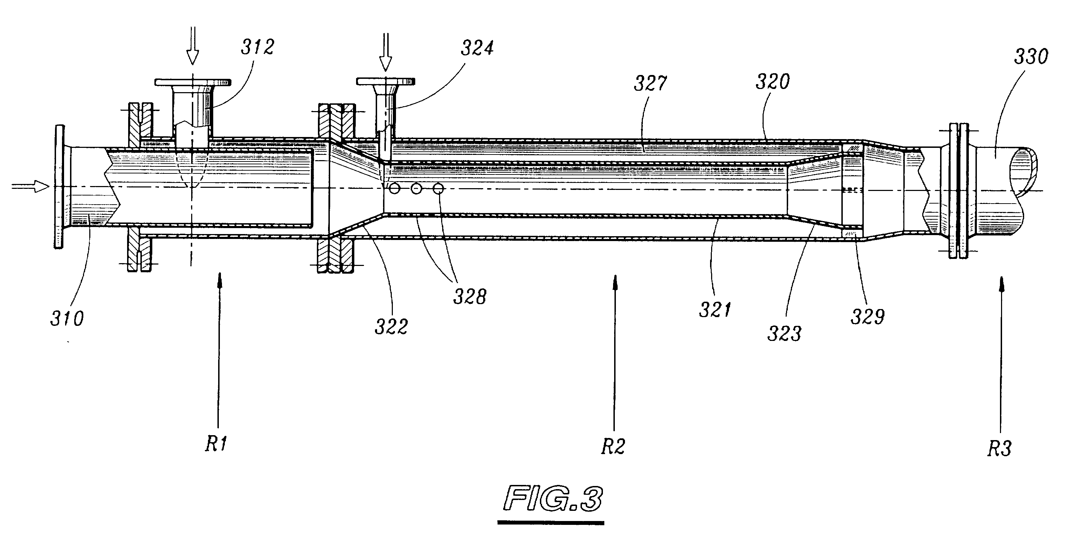

Le réacteur représenté à la figure 3 est très proche dans sa réalisation de celui représenté à la figure 2. Toutefois, le tube intérieur cylindrique 321 comporte dans sa zone amont des séries d'orifices 328 mettant en communication l'intérieur de ce tube avec la chambre annulaire 327. Ces orifices se trouvent au voisinage de l'arrivée d'ammoniac que constitue le conduit tangentiel 324.

De plus, à son extrémité aval, le tube intérieur est guidé dans le tube extérieur au moyen d'au moins trois entretoises 329.

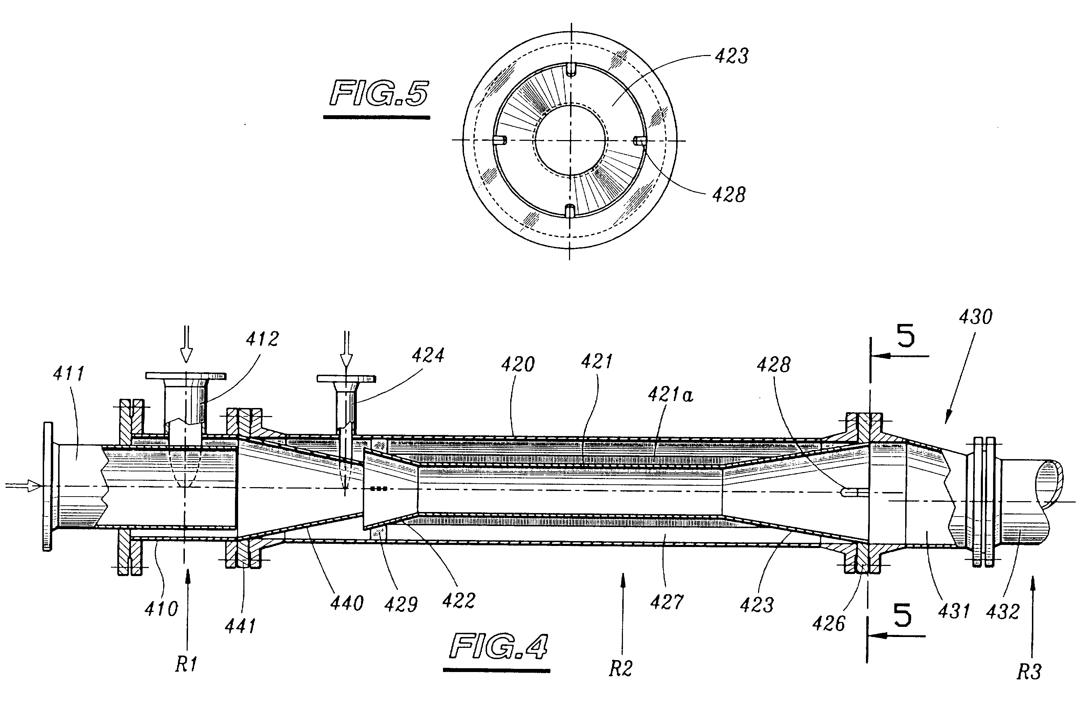

Dans la variante représentée à la figure 4, on retrouve un réacteur R en trois parties R₁, R₂, R₃. La partie amont comprend, comme dans les exemples précédents, un tronçon de tube 410 dans lequel débouchent des conduits respectivement axial 411 et tangentiel 412 d'alimentation en réactifs.

La deuxième partie R₂ du réacteur comprend un tube extérieur 420 de diamètre sensiblement égal à celui du tube 410.

Dans ce tube extérieur sont disposés d'une part un convergent 440 constitué par un tronçon de tube de forme tronconique fixé par une bride 441 entre les tubes 410 et 420 et, d'autre part, un tube intérieur fixé au voisinage de son extrémité aval par une bride 426, entre le tube 420 et le tube 430 constituant la troisième partie R₃ du réacteur.

Ce tube intérieur comprend un tronçon de tube cylindrique 421, un convergent 422 situé à son extrémité amont et dont le diamètre d'entrée est supérieur au diamètre de sortie du convergent 440 et un divergent 423 disposé à son extrémité aval. De préférence, le tube intérieur comporte des nervures de raidissement 421a s'étendant sur toute sa longueur et des entretoises 429 de guidage par rapport au tube extérieur 420.

Une chambre annulaire 427 est délimitée entre le tube extérieur 420, d'une part, et le convergent 440 et le tube intérieur 440, d'autre part, et un conduit 424 d'alimentation en ammoniac gazeux débouche au voisinage de la partie amont de cette chambre.

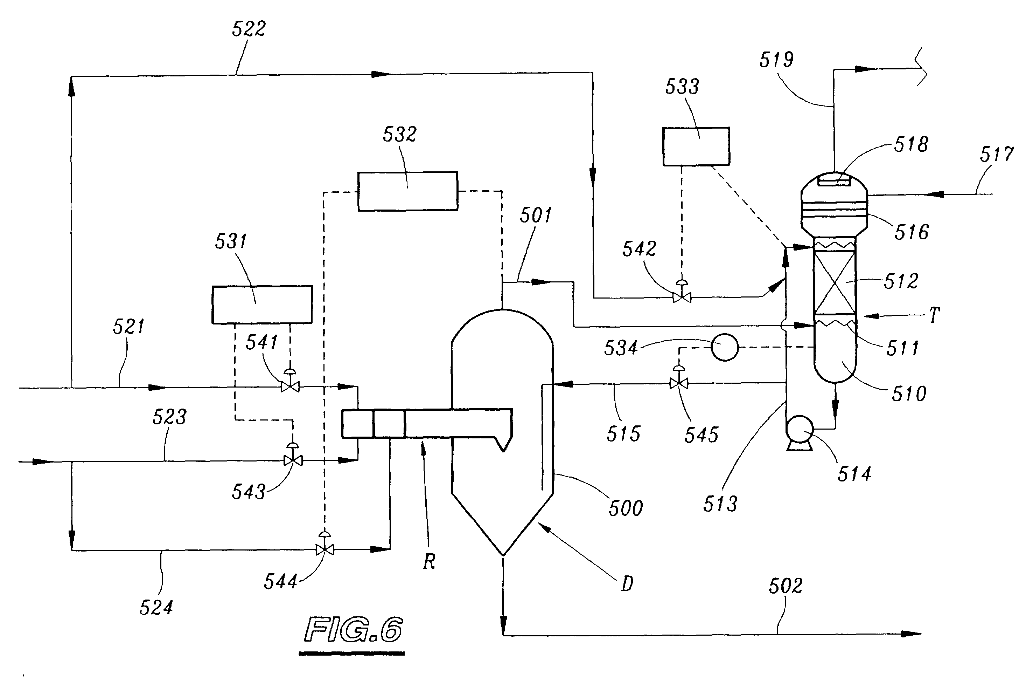

L'extrémité aval du tube intérieur comporte plusieurs ouvertures 428 mettant en communication son volume intérieur et la chambre annulaire 427 (Figures 4 et 5).

Le troisième tronçon R₃ du réacteur comprend dans l'exemple représenté un tronçon intermédiaire de raccordement 431 et un tube 432 de diamètre légèrement inférieur à celui du tube 420 et dont la longueur peut être comprise entre 10 et 50 fois son diamètre avec toutefois le souci de la maintenir dans la partie basse de cette plage ou même en-dessous.

On va maintenant décrire à propos de la figure 6 une installation de fabrication de sel d'ammoniaque, par exemple de nitrate d'ammoniaque, à laquelle est incorporé un réacteur R selon l'invention, par exemple sous la forme de l'une ou l'autre des variantes décrites précédemment.

Cette installation comprend outre ce réacteur R une enceinte de détente D et une colonne de traitement T.

L'enceinte de détente est constituée par un réservoir 500 dans lequel débouche de préférence tangentiellement l'extrémité du réacteur R de façon à séparer efficacement la solution de nitrate qui s'écoule vers le bas, de la vapeur qui subit un mouvement ascensionnel et s'échappe par une conduite 501. A sa partie supérieure, il peut avantageusement comporter un dispositif séparateur de gouttelettes, du type matelas tissé, plateau à cloches, garnissage ou tout autre moyen équivalent, retenant les gouttelettes pouvant être entraînées par la vapeur. A sa partie inférieure, il présente une forme conique et il est relié à une conduite 502 d'évacuation de la solution de nitrate.

La colonne de traitement ou de lavage T comporte par exemple, du bas vers le haut, les sections suivantes :
- un réservoir de liquide 510 ;
- un dispositif 511 d'injection de la vapeur provenant du réservoir de détente par la conduite 501 ;
- une première zone 512 comportant des éléments de garnissage du type anneaux, selles ou autres ;
- un circuit 513 de liquide de recirculation en provenance de la partie inférieure de la colonne et comportant une pompe 514 ; un contrôle de niveau dans le réservoir 510 permet d'évacuer le trop plein de solution de sel vers le réservoir 500 par une ligne 515 ;
- une deuxième zone 516 comportant des éléments de garnissage ou une série de plateaux du type à calottes ou équivalents ;
- une arrivée 517 d'eau propre et/ou de condensats de procédé préalablement traités ;
- un séparateur de gouttelettes 518 du type matelas tissé, plateau à cloches, éléments de garnissage, etc... ;
- une ligne 519 de départ de la vapeur.

En variante, la colonne T peut être remplacée par une série d'éléments indépendants, placés les uns au-dessus des autres et remplissant sensiblement les mêmes fonctions que les différents étages de la colonne T. De même, la zone de neutralisation 512 contenant des éléments de garnissage peut être remplacée par un réacteur à venturi ou moyen analogue équivalent.

Les circuits d'alimentation en réactifs comprennent :
- un circuit d'acide nitrique à la concentration convenable, comprenant deux lignes 521, 522, une ligne 521 d'alimentation du réacteur R et une ligne 522 qui débouche dans le circuit 513 de recirculation de la solution de nitrate associé à la colonne de traitement ; cette ligne 522 pourrait en variante déboucher directement dans la colonne de traitement T ;
- un circuit d'alimentation en ammoniac comprenant lui aussi deux lignes 523, 524 alimentant respectivement les tronçons amont R₁ et intermédiaire R₂ du réacteur. En variante, l'alimentation principale 523 en ammoniac peut être réparties entre deux conduites débouchant l'une en amont et l'autre en aval de l'arrivée dans le réacteur de la ligne 524 fournissant la quantité additionnelle régulée d'ammoniac.

De façon connue, l'acide nitrique et l'ammoniac peuvent être préchauffés dans des échangeurs appropriés (non représentés) de préférence alimentés par la vapeur produite dans l'installation, de façon à améliorer le rendement thermique de la réaction.

L'installation est complétée par un dispositif de régulation schématisé en 531, 532, 533, 534, qui règle les débits dans les différentes lignes de l'installation en fonction de valeurs de consigne et de valeurs mesurées d'un certain nombre de paramètres.

Ce dispositif de régulation agit sur des vannes placées respectivement sur les différentes lignes et dont seules les principales d'entre elles 541-545 ont été représentées aux dessins.

D'une façon générale, ce dispositif ne sera pas décrit en détail et l'on se contentera d'indiquer quelles sont les fonctions principales remplies, les moyens permettant d'effectuer une telle régulation étant par ailleurs bien connus de l'homme du métier.

Le fonctionnement d'un réacteur et d'une installation selon l'invention sont les suivants :

La plus grande partie de la réaction de neutralisation s'effectue dans le réacteur R. Les débits d'acide et d'ammoniac dans la partie R₁ sont réglés de façon à conserver un rapport aussi proche que possible du rapport stoechiométrique par exemple à ± 1 % près et de préférence avec un très léger excès d'ammoniac. Entre 80 et 99 % et de préférence entre 92 et 99 %, par exemple 98 %, du débit total de réactifs sont introduits dans la chambre de réaction amont R₁ du réacteur. L'acide nitrique a une concentration comprise entre 50 et 70 % et de préférence entre 55 et 63 %. Dans le cas de l'acide sulfurique et de l'acide phosphorique, la concentration peut être choisie entre 70 et 99 %, et entre 52 et 70 %, respectivement. L'ammoniac est sous forme gazeuse anhydre.

Le pourcentage restant d'ammoniac, est introduit dans le deuxième tronçon R₂.

Dans l'exemple de la figure 1, le fait d'introduire dans la partie centrale R₂ du réacteur une quantité supplémentaire d'ammoniac a pour effet d'améliorer le rendement de la réaction et de limiter la corrosion dans cette partie centrale. De plus le tube 121, 122, 123 qui constitue la partie du réacteur susceptible de subir le plus la corrosion peut être considéré comme une pièce consommable, dont le coût est sensiblement plus faible que celui de l'ensemble du réacteur.

Dans le mode de réalisation de la figure 2, la présence d'un tube intérieur dans la partie centrale R₂ du réacteur et le fait d'introduire dans la chambre annulaire 227 une quantité supplémentaire d'ammoniac limite la corrosion pratiquement au seul élément intérieur 221, 222, 223 de cette partie centrale.

Dans le mode de réalisation des figures 3 et 4 la présence d'orifices 328 dans le premier cas et la disposition des convergents 422 et 440 dans le second cas provoquent une aspiration de l'ammoniac débouchant par le conduit 324, 424, en direction du tube intérieur. Selon les conditions de fonctionnement du réacteur, un débit peut s'établir dans la chambre annulaire 327, 427 soit dans le sens de l'amont vers l'aval, soit dans le sens contraire. Dans les deux cas de figure, cette circulation garantit que du nitrate ne pourra pas stagner dans cette zone intermédiaire, ce qui pourrait représenter un danger compte tenu de la nature explosive de ce produit.

D'une façon générale, en variante, le tronçon intermédiaire 121 ; 221; 321 ; 421, 440, de longueur réduite (1 m à 1,8 m par exemple) peut être réalisé en titane.

Selon l'invention le débit d'ammoniac dans la ligne 524 est réglé de façon à obtenir l'excédent d'ammoniac souhaité dans les parties R₂ et R₃ et obtenir dans le réservoir de détente 500 des vapeurs présentant un pH basique par exemple supérieur à 9. Le dispositif 532 règle donc l'ouverture de la vanne 544 en fonction de la valeur du pH mesurée sur la ligne 501.

De façon connue, la solution de nitrate et la vapeur se séparent dans le réservoir 500, la solution étant recueillie à la partie inférieure de ce dernier tandis que la vapeur est évacuée à la partie supérieure.

La pression dans ce réservoir est de préférence maintenue entre 1 et 8 bars, le réacteur étant quant à lui de préférence alimenté en ammoniac et acide nitrique à des pressions comprises entre 5 et 10 bars pour permettre une détente suffisante dans le réservoir.

Les vapeurs basiques pénétrant dans la colonne de traitement T y sont neutralisées par addition d'une solution de lavage formée d'un mélange de nitrate d'ammoniaque recyclé à partir du bas de cette colonne et d'acide nitrique, la quantité d'acide nitrique injectée par la ligne 522 dans le circuit 513 ou dans la colonne T étant conditionnée par le pH de la solution de nitrate d'ammoniaque recyclé sur la colonne. Le point de consigne du pH-mètre 533 est fixé de façon à obtenir une solution de lavage suffisamment acide pour neutraliser l'ammoniac restant. Ce pH-mètre agit sur la vanne de contrôle 542 de la ligne 522 par laquelle arrive l'acide nitrique. La concentration de la solution acide de lavage est avantageusement comprise entre 5 et 20 % mais peut être accrue jusqu'à 40 %.

La présence de cette colonne a pour résultat d'obtenir une neutralisation complète et des vapeurs pratiquement exemptes d'ammoniac. Les deux problèmes évoqués au début de ce mémoire sont donc bien résolus par l'invention.

## Revendications

1. Réacteur pour la fabrication de sels d'ammoniaque, du type comprenant une chambre de réaction tubulaire (110 ; 210 ; 310 ; 410), au moins une alimentation (111 ; 211 ; 311 ; 411) en ammoniac et au moins une alimentation (112 ; 212 ; 312 ; 412) en acide, disposées dans une première partie amont (R₁) du réacteur, caractérisé en ce qu'il comprend une deuxième partie (R₂) disposée dans le prolongement de la première et comportant de l'amont vers l'aval : un tronçon convergent (122 ; 222 ; 322 ; 422), un tronçon cylindrique (121 ; ; 221; 321 ; 421) et un tronçon divergent (123 ; 223 ; 323 ; 423), cette deuxième partie étant munie d'au moins une deuxième alimentation (124 ; 224 ; 324 ; 424) en ammoniac qui débouche dans cette deuxième partie au voisinage du tronçon convergent.

2. Réacteur suivant la revendication 1, caractérisé en ce que la deuxième partie de ce réacteur comprend un tube (121) de diamètre inférieur à celui du tube délimitant la chambre de réaction (110), prolongé à sa partie amont par un convergent (122) et à sa partie aval par un divergent (123).

3. Réacteur suivant la revendication 1, caractérisé en ce que la deuxième partie du réacteur comprend un tube extérieur (220) et un tube intérieur (221) de diamètre inférieur à celui du tube délimitant la chambre de réaction et comportant un convergent (222) à sa partie amont et un divergent (223) à sa partie aval, une chambre (227) de forme sensiblement annulaire étant délimitée entre les deux tubes extérieur (220) et intérieur (221, 222, 223), le volume intérieur du tube intérieur et la chambre annulaire communiquant entre-eux au moins au voisinage de leurs extrémités aval.

4. Réacteur suivant la revendication 3, caractérisé en ce que le tube intérieur (321) comporte dans sa partie amont une série d'orifices (328), le conduit d'alimentation (324) en ammoniac débouchant dans le tube extérieur (320) au voisinage de cette série d'orifices (328).

5. Réacteur suivant la revendication 1, caractérisé en ce que la deuxième partie de ce réacteur comprend un tube extérieur (420) et, de l'amont vers l'aval à l'intérieur de ce tube extérieur, un premier convergent (440) puis un tube intérieur (421) de diamètre inférieur à celui du tube délimitant la chambre de réaction (410) et prolongé à son extrémité amont par un convergent (422) dont le diamètre d'entrée est supérieur au diamètre de sortie du premier convergent (440), et à son extrémité aval par un divergent (423), le deuxième conduit (424) d'alimentation en ammoniac débouchant au voisinage de l'entrée du convergent (422) du tube intérieur.

6. Réacteur suivant la revendication 5, caractérisé en ce que le tube intérieur (421, 422, 423) est fixé au voisinage de son extrémité aval par une bride (426), entre le tube extérieur (420) et un tube (430) constituant une troisième partie R₃ du réacteur.

7. Réacteur suivant l'une quelconque des revendications 3 à 6, caractérisé en ce que le tube intérieur est muni d'entretoises (329, 429) de guidage par rapport au tube extérieur.

8. Réacteur suivant l'une quelconque des revendications 3 à 7, caractérisé en ce que le tube intérieur comporte des nervures de raidissement (421a) s'étendant le long de sa partie cylindrique et entre sa partie convergente et sa partie divergente.

9. Réacteur suivant l'une quelconque des revendications 5 à 8, caractérisé en ce que le tube intérieur (423) comporte au voisinage de son extrémité aval plusieurs ouvertures (428) mettant en communication le volume intérieur de ce tube et avec la chambre (427) de forme sensiblement annulaire.

10. Réacteur suivant l'une quelconque des revendications 1 à 9, caractérisé en ce que la deuxième alimentation en ammoniac débouche dans le réacteur (R) en aval de brides de raccordement (116, 126) entre un premier et un deuxième tronçons du réacteur.

11. Réacteur suivant l'une quelconque des revendications 1 à 9, caractérisé en ce que la deuxième alimentation en ammoniac débouche dans le réacteur (R) en amont de brides de raccordement (116, 126) entre un premier et un deuxième tronçons du réacteur.

12. Procédé de fabrication de sel d'ammoniaque, du type dans lequel on introduit au voisinage de l'extrémité amont d'un réacteur tubulaire (R) des réactifs comprenant au moins un acide et de l'ammoniaque, puis on sépare dans une enceinte de détente (D) le sel en solution de la vapeur sortant du réacteur, caractérisé en ce qu'on introduit dans la partie amont du réacteur entre 80 et 99 % du débit total de réactifs, on introduit la partie restante de l'ammoniac dans une deuxième partie du réacteur, située dans le prolongement de la première, de telle façon que la vapeur séparée dans l'enceinte de détente ait un pH basique et l'on termine la réaction de neutralisation lors d'une étape supplémentaire, en amenant en contact les vapeurs basiques sortant de l'enceinte de détente avec la partie restante de l'acide.

13. Procédé suivant la revendication 12, caractérisé en ce que l'acide et l'ammoniac introduits dans la partie amont du réacteur tubulaire sont maintenus dans des proportions sensiblement stoechiométriques.

14. Procédé suivant l'une quelconque des revendications 12 et 13, caractérisé en ce que la quantité de réactifs introduite dans la partie amont du réacteur représente entre 92 et 99 % du débit total de réactifs.

15. Procédé suivant l'une quelconque des revendications 12 à 14, caractérisé en ce que le débit d'ammoniac introduit dans la deuxième partie du réacteur est réglé de façon à obtenir l'excédent d'ammoniac souhaité dans la partie aval du réacteur et de façon à obtenir après séparation dans l'enceinte de détente, des vapeurs présentant un pH basique, de préférence supérieur à 9.

16. Procédé suivant l'une quelconque des revendications 12 à 15, caractérisé en ce que l'étape supplémentaire au cours de laquelle on termine la réaction de neutralisation, est effectuée en neutralisant les vapeurs basiques au moyen d'une solution de lavage formée d'un mélange de sel d'ammoniaque recyclé et d'acide.

17. Procédé suivant l'une quelconque des revendications 12 à 16, caractérisé en ce que la quantité d'acide utilisée au cours de la phase supplémentaire de neutralisation est réglée en fonction du pH de la solution de sel d'ammoniaque recyclée.

18. Procédé suivant l'une quelconque des revendications 12 à 17, caractérisé en ce que l'ammoniac introduit dans la partie amont du réacteur est introduit par au moins deux conduits, la somme des débits introduits par ces deux conduits étant dans un rapport sensiblement stoechiométrique avec la quantité d'acide introduite dans le réacteur.

19. Installation de fabrication de sel d'ammoniaque, pour la mise en oeuvre d'un procédé tel que défini dans l'une quelconque des revendications 12 à 18, comprenant un réacteur tubulaire (R), au moins une alimentation en ammoniac (111 ; 211 ; 311 ; 411) et au moins une alimentation en acide (112 ; 222 ; 312 ; 412) débouchant dans une première partie ou partie amont du réacteur, ce réacteur débouchant dans une enceinte de détente (D) dans laquelle on effectue la séparation du sel en solution et de la vapeur, caractérisée en ce que le réacteur (R) est tel que défini dans l'une quelconque des revendications 1 à 11, et en ce que l'installation est complétée par un étage supplémentaire (T) dans lequel on met en contact la vapeur en provenance de l'enceinte de détente (D) et la partie restante de l'acide, de façon à obtenir une neutralisation complète.

20. Installation suivant la revendication 19, caractérisée en ce que l'étage supplémentaire de neutralisation (T) comprend une colonne de traitement comportant un réservoir de liquide (510), un dispositif (511) d'injection de la vapeur en provenance de l'enceinte de détente (D), au moins un dispositif d'injection d'acide (513, 522), au moins une zone (512) de mise en contact de la vapeur et de l'acide, un dispositif de lavage (516, 517) et des moyens (519) d'évacuation des vapeurs exemptes d'ammoniac.

21. Installation suivant l'une quelconque des revendications 19 et 20, caractérisée en ce qu'il est prévu un circuit (513, 514) de recirculation de la solution de sel produite dans l'étage supplémentaire de neutralisation.

22. Installation suivant l'une quelconque des revendications 19 à 21, caractérisée en ce que le trop-plein de solution de sel produite dans l'étage supplémentaire de neutralisation (T) est dirigé vers l'enceinte de détente (D).
